# EUROPEAN PATENT APPLICATION

(11) **EP 1 096 431 A1**
(43) Date of publication of application: **02.05.2001**
(21) Application number: 99121406.5
(22) Date of filing: 27.10.1999
(51) Int. Cl.: G07C 11/00, G06F 17/60

(54) **Reservation system and mobile terminal for the reservation of queuing numbers**

(71) Applicant: Sony International (Europe) GmbH, 50829 Köln (DE)
(72) Inventor: Kärkkäinen, Kari, c/o Sony Int.(Europe) GmbH, 85609 Aschheim (DE)
(74) Representative: Körber, Martin, Dipl.-Phys.

(57) **Abstract**

The present invention related to a reserving system 1 for the reservation of queuing numbers, whereby queuing numbers are directly distributed to physically present users at a particular location at which users are served on the basis of queuing numbers, and queuing numbers are also allocated to remote users using a mobile terminal for a wireless communication system for reserving queuing numbers. The reservation system 1 according to the present invention comprises distributing means for distributing queuing numbers directly to physically present users at the location, receiving means 4 for receiving SMS messages with queuing number requests from remote users on the basis of the wireless telecommunication system, processing means 3 for controlling the distribution of queuing numbers by said distributing means 2 and, upon reception of a queuing number request from a remote user by means of the receiving means 4, allocating an unoccupied queuing number to said remote user and generating a queuing number confirmation, and transmitting means 5 for transmitting the queuing number confirmation as SMS message to said remote user on the basis of the wireless telecommunication system. The mobile terminal according to the present invention comprises processing means 24 for providing a SMS message format as a basis for the generation and transmission of queuing number requests to the reservation system 1 for reserving and distributing queuing numbers at the location, where users are served on the basis of the queuing numbers, input means 26 for inputting a queuing number request in the SMS message format provided by said processing means 24, transmitting means 22 for transmitting an input queuing number request as SMS message to the reservation system on the basis of the wireless telecommunication system, receiving means 23 for receiving a SMS message with queuing number confirmation containing an allocated queuing number, and display means 25 for displaying said allocated queuing number.

## Description

The present invention relates to a reservation system for the reservation of queuing numbers and to a mobile terminal for transmitting and receiving information in a wireless communication system, which can be used for the reservation of queuing numbers by a user remote from the reservation system.

Reservation system for the reservation of queuing numbers comprising a distributing means for distributing queuing numbers directly to physically present users at a location at which users are served on the basis of queuing numbers are known. Many official institutions and government offices as well as supermarkets and shops in use reservation systems comprising such a distribution means. The basic principle is that a user enters the institution building, government building, office, shop etc. and pulls out a piece of paper which has the queuing number printed on it, from the distribution means. The number on the paper therefore indicates the position the user has in the queuing line of people waiting to be served. When the turn for the distributed queuing number has come, the respective number is called or displayed on a display, so that the respective user knows it is his turn now. Then, the user enters the office room or is being served by the next unoccupied service person. Usually the distributing means also comprises a display for displaying an estimated average waiting time or the number of not yet served numbers when the paper with the queuing number is pulled out from the distribution means. During busy times, the waiting time could be more than an hour.

The problem with these known reservation systems is that a user has to come physically to the location, for example the office, shop etc., where the required service is offered. After getting a queuing number, the user than has to stay at the location and wait in the waiting room for his turn. Another problem is, that the locations have to offer large waiting lounges with seats for the users to wait for their turn.

JP-A 07066891 discloses a mutual communication reservation system which enables a user to reserve his turn on a reservation system automatically. This reservation system is specially adapted for hospitals and provides special input means for each user connected to the normal fixed wired telephone system to reserve queuing numbers from locations remote to the location where the required service is offered. The reservation system informs a remote user about his approaching turn through a telephone set, radio paging or a computer.

The disadvantage of this known system is that each remote user needs a specially adapted input means connected to a normal telephone operators which is connected to a wired telephone network. Although this reservation system might be useful in hospitals where each remote user is normally in this room, so that each room can be equipped with such an input means connected to a telephone apparatus, this reservation system cannot be used for other locations such as government buildings, offices, shops or the like in a flexible and simple way.

The object of the present invention is therefore to provide a possibility for the reservation of queuing numbers for a specific location, where the required service is offered, even for remote or physically not present users in a flexible, simple and effective way.

This object is achieved by a reservation system for the reservation of queuing numbers according to claim 1, comprising distributing means for distributing queuing numbers directly to physically present user at a location at which users are served on the basis of queuing numbers, receiving means for receiving SMS messages with queuing number requests from remote users on the basis of a wireless telecommunication system, processing means for controlling the distribution of queuing numbers by said distributing means and, upon reception of a queuing number request from a remote user by means of said receiving means, allocating an unoccupied queuing number to said remote user and generating a queuing number confirmation, and transmitting means for transmitting said queuing number confirmation as SMS message to said remote user on the basis of said wireless telecommunication system.

The above object is further achieved by a mobile terminal for transmitting and receiving information in a wireless telecommunication system according to claim 9, comprising processing means for providing a SMS message format as a basis for the generation and transmission of queuing number requests to a reservation system for reserving and distributing queuing numbers at a location where users are served on the basis of queuing numbers, input means for inputting a queuing number request in said SMS message format provided by said providing means, transmitting means for transmitting an input queuing request as SMS message to said reservation system on the basis of said wireless telecommunication system, receiving means for receiving a SMS message with a queuing number confirmation containing an allocated queuing number and display means for displaying said allocated queuing number.

The present invention therefore provides a simple, flexible, cheap and efficient possibility for reserving queuing numbers without the necessity to be physically present at the respective location where the required service is offered. The use of (Short Message Service) SMS messages, as for example used in the GSM (Global System for Mobile communication), provides a very quick, simple and cheap possibility for transmitting queuing number requests and confirmations flexibly from any place, where a wireless telecommunication connection is possible without the need for specially adapted input means connected to a telephone apparatus of a fixed wire telephone network. Thus, the present invention enables users to come to the location where the required service is offered only when it is actually their turn. This, on the other hand, enables significant reductions of the size of waiting areas.

Advantageously, the processing means of the reservation system according to the present invention further generates, together with a queuing number confirmation, time information for the respectively allocated queuing number, said time information indicating a time at which the allocated queuing number will be served at said location, whereby the transmitting means transmits the time information together with the queuing number confirmation in the SMS message. Thus, the remote user receives his allocated queuing number as well as an estimated value for the waiting time and can thus organise and plan his trip to the location in due time.

Further advantageously, the processing means of the reservation system generates a reminder information for reminding a remote user that his allocated queuing number will be served soon, whereby said transmitting means transmits the reminder information as SMS message to said remote user before his queuing number is to be served at said location. This assures that the remote user does not miss his turn. Further, a possibility could be provided for the remote user to cancel his reservation of his queuing number in case that he notices that he will not be able to make it to the location within the remaining time period.

Advantageously, the transmitting means of the reservation system transmits the reminder information a pre-set time period before the respective remote user's queuing number is to be served at that location. Alternatively, the transmitting means of the reservation system transmits the reminder information a pre-set number of not yet served queuing numbers before the respective remote user's queuing number is to be served at said location. In the case that the transmitting means transmits the reminder information the pre-set time period before the remote user's turn, an estimate of the remaining waiting time has to be calculated in the processing means of the reservation system on the basis of the not yet served queuing numbers. The pre-set time period and the pre-set number of not yet served queuing numbers, respectively, can be pre-set in the processing means of the reservation system for a respective remote user on the basis of a corresponding information received from said remote user. Thus, a remote user can determine how long or how many other users before his turn he wants to receive the reminder message.

Further advantageously, the distributing means of the reservation system comprises a display means for displaying information on the waiting time or on the number of already distributed allocated but not yet served queuing numbers at the location. Thereby, the directly distributed queuing numbers to physically present users at the location as well as the queuing numbers allocated to remote users are used to calculate the displayed waiting information.

Further advantageously, the distribution means comprises a printing means for printing a next queuing number on a piece of paper when a physically present user at said location activates an activating means on said distributing means. In known reservation systems, a role of paper pieces with consecutive numbers was used to allocate the queuing numbers to the physically present users. However, since queuing numbers according to the present invention are reserved by remote users, too, the queuing number is directly distributed at the location are not consecutive and have therefore been printed instantaneously upon demand.

The receiving means of the mobile terminal according to the present invention advantageously receives in said SMS message together with the queuing number confirmation a time information indicating a time point at which the allocated queuing number will be served at said location, whereby the display means of the mobile terminal displays the time information. In this case, the processing means of the mobile terminal can use the time information to generate a reminder information which is displayed by the displaying means a pre-set time period before the allocated queuing number is to be served at the location. Thus, the reminder information is generated in the mobile terminal itself.

Alternatively, the user can select one of the options of either not receiving a SMS message from the reservation system, containing a reminder information before his allocated queuing number is to be served at the location, or receive such a reminder information a pre-set time before his allocated queuing number is to be served at the location or to receive such a reminder information a pre-set number of not yet served queuing numbers before his allocated queuing number is to be served at the location. In these cases, the remote user receives the reminder information from the reservation system.

The present invention is explained in more detail in the following description by means of preferred embodiments thereof related to the enclosed drawings, in which
Fig. 1 shows a schematic block diagram of a reservation system according to the present invention and
Fig. 2 shows a schematic block diagram of a mobile terminal according to the present invention.

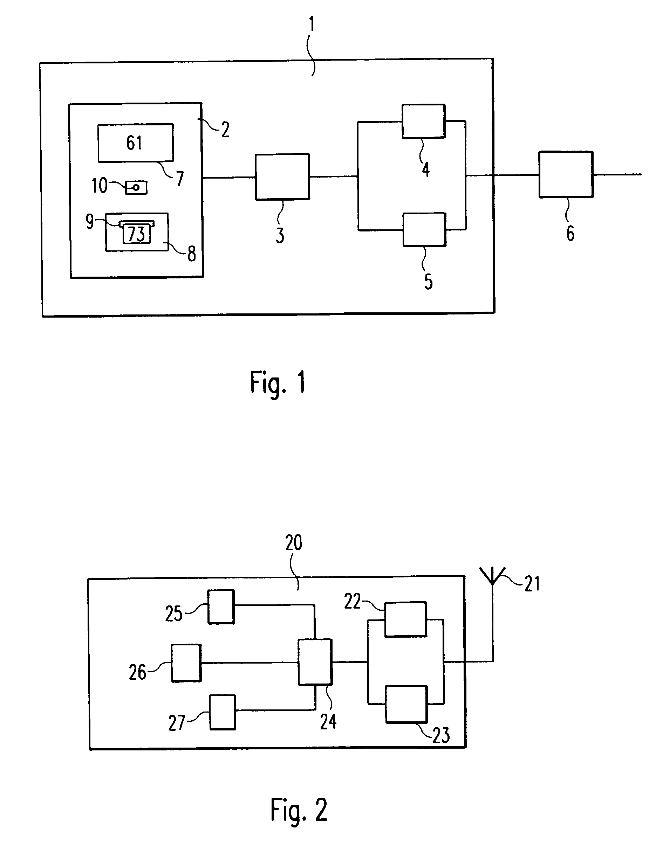

In Fig. 1, a schematic block diagram of a reservation system for the reservation of queuing numbers according to the present invention is shown. The reservation system 1 comprises a distributing means 2 for distributing queuing numbers directly to physically present users. The distributing means 2 is thereby located at a location at which users are served on the basis of queuing numbers, as for example a government office, a bank, a shop or the like. The queuing numbers can for example be distributed in form of pieces of paper having the respective next unoccupied queuing number printed on it.

The reservation system 1 further comprises receiving means 4 for receiving SMS messages with queuing number requests from remote users on the basis of a wireless radio communication system, as for example the GSM system. The receiving means 4 is thereby connected to a communication network as for example a wired telephone network 6 connected to base stations of the wireless telecommunication system. The reservation system 1 further comprises transmitting means 5 also connected to the communication system 6 for transmitting queuing number confirmations as SMS messages on the basis of the wireless telecommunication system, whereby the queuing number confirmations answer and confirm queuing number requests received by the receiving means 4.

Further provided in said reservation system 1 is the processing means 3, as for example a CPU for controlling the distribution of queuing numbers and, upon receiving a queuing number request in said receiving means 4, allocating a next unoccupied queuing number to the remote user having sent the queuing number request and generating a queuing number confirmation. The queuing number confirmation is than transmitted by the transmitting means 5 as SMS message to the remote user. The receiving means 4 and the transmitting means 5 can for example be part of the same unit, as for example a GSM-modem or an ISDN-card.

The distributing means 2 comprises a display 7 for displaying the queuing number, which is to be served next. In the shown case, the queuing number 61 is the next queuing number to be served. The distributing means 2 further comprises a printing means 8 with a slot 9 for distributing pieces of paper with the next unoccupied queuing number. In the shown case, the queuing number 73 is the next unoccupied queuing number. The printing means 8 instantaneously prints the next unoccupied queuing number on a piece of paper when an activating means 10, as for example a push button, of the distributing means 2 is activated by a physically present user. Thereby, the next unoccupied queuing number is determined in the processing means 3, which counts the queuing numbers distributed from the distributing means 2 to physically present users at the location, at which the distributing means 2 is located, and also the queuing numbers which have been allocated to remote users.

A mobile terminal 20 for transmitting and receiving information in wireless communication systems as for example the GSM system, according to the present invention, as shown schematically in Fig. 2. The shown mobile terminal 20 can be used by a remote user to reserve the queuing number in the reservation system 1 remotely. The mobile terminal 20 comprises an antenna 21 connected to a transmitting means 22 and a receiving means 23 for transmitting and receiving information in the wireless telecommunication system, in particular SMS messages containing queuing number requests or queuing number information. The mobile terminal 20 further comprises a processing means 24 for controlling the transmission and reception of information, processing received or to be transmitted information and controlling the operation of the mobile terminal 20. Particularly the processing means 24 provides a SMS message format as a basis for the generation and transmission of queuing number requests to the reservation system 1 for reserving and distributing queuing numbers at the location, where users are served on the basis of the queuing numbers. The mobile terminal further comprises an input means 26 for inputting queuing number requests in the SMS message format provided by the processing means 24. The input means 26 can for example be the normal input key pads of the mobile terminal 20. Further, the mobile terminal 20 comprises a display means 25 and an output means 27, for example a loudspeaker.

A user located remotely from the reservation system 1 wanting to reserve a queuing number selects the respective queuing number reservation modus on the mobile terminal 20. The remote user inputs the respective queuing number request or reads out the respective queuing number request from a storage means of the mobile terminal 20. The processing means 24 thereby provides a pre-set SMS message format for the queuing number request and transmits the queuing number request as an SMS message via the wireless telecommunication system to the reservation system 1. The reservation system 1 receives the queuing number request, whereby the processing means 3 of the reservation system 1 takes the next unoccupied queuing number, allocates this queuing number to the remote user, generates a queuing number confirmation and sends the queuing number confirmation together with the allocated queuing number back to the mobile terminal 20 as a SMS message. The mobile terminal 20 receives the SMS message with the queuing number confirmation and notifies the remote user, for example by displaying the allocated queuing number on the display means 25 and/or by outputting a respective acoustic signal.

The processing means 3 of the reservation system 1 generates, together with the queuing number confirmation, a time information indicating a time point at which the allocated queuing number will be served at the location. Alternatively, the processing means 3 can generate a waiting information indicating the number of not yet served people. Anyway, the processing means 3 receives information from the respective service places at the location indicating which queuing numbers have been served. This time or waiting information is transmit together with the queuing number confirmation in the SMS message to the mobile terminal 20. The mobile terminal 20, upon receiving the SMS message, indicates the time or the waiting information together with the allocated queuing number. In case that the mobile terminal 20 is switched off or in a conversation mode, the received SMS message is stored and displayed after the mobile terminal 20 is switched on again or the conversation mode is terminated.

The processing means 24 of the mobile terminal 20, upon receiving the allocated queuing number and the time information, can use the time information to generate a reminder information which is displayed by the display means 25 a pre-set time period before the allocated queuing number is to be served at the location. This serves to warn the remote user that he has to get on his way to the location in due time. Alternatively, the reminder information can be generated in the processing means 3 of the reservation system 1, so that the reminder information is transmitted as a SMS message to the mobile terminal 20 a pre-set time period before the allocated queuing number is to be served at the location. Thereby, the remote user can select not to receive the reminder information, to receive the reminder information a pre-set time period before his queuing number is to be served at the location, or to receive the reminder information a pre-set number of not yet served queuing numbers before his allocated queuing number is to be served at the location. For example, the remote user could chose to receive the reminder information 20 minutes before his turn or to receive the reminder information when there are 10 people, i. e. 10 not yet served queuing numbers before his turn.

Further, the queuing number confirmation could serve as a receipt and for proving the queuing number when the remote user is to be served at the location, since he does not have a piece of paper showing his allocated queuing number. The allocated queuing number could then be displayed on the display means 25 of the mobile terminal 20 to show the service personal that he was the one who reserved this queuing number.

It is to be noted, that the reservation system 1 and the mobile terminal 20 comprise further elements which are necessary for the respective operation, but not important for the present invention.

## Claims

1. Reservation system (1) for the reservation of queuing numbers, comprising distributing means (2) for distributing queuing numbers directly to physically present users at a location at which users are served on the basis of queuing numbers, receiving means (4) for receiving SMS messages with queuing number requests from remote users on the basis of a wireless telecommunication system, processing means (3) for controlling the distribution of queuing numbers by said distributing means (2) and, upon reception of a queuing number request from a remote user by means of said receiving means (4), allocating an unoccupied queuing number to said remote user and generating a queuing number confirmation, and transmitting means (5) for transmitting said queuing number confirmation as SMS message to said remote user on the basis of said wireless telecommunication system.

2. Reservation system (1) for the reservation of queuing numbers according to claim 1,
**characterized in,**
that the processing means (3), together with a queuing number confirmation, further generates a time information for the respectively allocated queuing number, said time information indicating a time at which the allocated queuing number will be served at said location, and
said transmitting means (5) transmits said time information together with said queuing number confirmation in the SMS message.

3. Reservation system (1) for the reservation of queuing numbers according to claim 1 or 2,
**characterized in,**
that the processing means (3) generates a reminder information for reminding a remote user that his allocated queuing number will be served soon, and
said transmitting means (5) transmits said reminder information as SMS message to said remote user before his queuing number is to be served at said location.

4. Reservation system (1) for the reservation of queuing numbers according to claim 3,
**characterized in,**
that said transmitting means (5) transmits said reminder information a pre-set time period before the respective remote user's queuing number is to be served at said location.

5. Reservation system (1) for the reservation of queuing numbers according to claim 3,
**characterized in,**
that said transmitting means (5) transmits said reminder information a pre-set number of not yet served queuing numbers before the respective remote user's queuing number is to be served at said location.

6. Reservation system (1) for the reservation of queuing numbers according to claim 4 or 5,
**characterized in,**
that said pre-set time period and said pre-set number of not yet served queuing numbers, respectively, is pre-set in said processing means (3) for a respective remote user on the basis of a corresponding information received from said remote user.

7. Reservation system (1) for the reservation of queuing numbers according to one of the preceding claims,
**characterized in,**
that the distributing means (2) comprises a display means (7) for displaying information on the waiting time or on the number of already distributed and allocated but not yet served queuing numbers at said location.

8. Reservation system (1) for the reservation of queuing numbers according to one of the preceding claims,
**characterized in,**
that said distributing means (2) comprises a printing means (8) for printing a next queuing number on a piece of paper when a physically present user at said location activates an activating means (10) on said distributing means.

9. Mobile terminal (20) for transmitting and receiving information in a wireless telecommunication system, comprising
processing (24) means for providing a SMS message format as a basis for the generation and transmission of queuing number requests to a reservation system for reserving and distributing queuing numbers at a location where users are served on the basis of queuing numbers,
input means (26) for inputting a queuing number request in said SMS message format provided by said processing means (24),
transmitting means (22) for transmitting an input queuing number request as SMS message to said reservation system on the basis of said wireless telecommunication system,
receiving means (23) for receiving a SMS message with a queuing number confirmation containing an allocated queuing number, and
display means (25) for displaying said allocated queuing number.

10. Mobile terminal (20) according to claim 9,
**characterized in,**
that said receiving means (23) receives in said SMS message together with said queuing number confirmation a time information indicating a time at which the allocated queuing number will be served at said location, and
said display means (25) displays said time information.

11. Mobile terminal (20) according to claim 10,
**characterized in,**
that said processing means (24) uses said time information to generate a reminder information which is displayed by said display means (25) a pre-set time period before said allocated queuing number is to be served at said location.

12. Mobile terminal (20) according to claim 9 or 10,
**characterized in,**
that a user may select one of the options of either not receiving a SMS message from said reservation system containing a reminder information before his allocated queuing number is to be served at said location, or to receive such a reminder information a pre-set time before his allocated queuing number is to be served at said location, or to receive such a reminder information a pre-set number of not yet served queuing numbers before his allocated queuing number is to be served at said location.
